# EUROPEAN PATENT SPECIFICATION

(11) **EP 3 429 873 B1**
(45) Date of publication and mention of the grant of the patent: **12.08.2020**
(21) Application number: 17716797.0
(22) Date of filing: 15.03.2017
(51) Int. Cl.: B60G 17/08, B60G 21/073, B60G 11/30, B60G 17/04, B62K 5/10

(54) **IMPROVED SUSPENSION**
VERBESSERTE AUFHÄNGUNG
SUSPENSION AMÉLIORÉE

(30) Priority: 15.03.2016 IT UA20161684
(43) Date of publication of application: 23.01.2019
(73) Proprietor: Qooder S.A., 6833 Vacallo (CH)
(72) Inventor: MORONI, Marco, 21055 Gorla Minore (VA) (IT); MARABESE, Riccardo, 21013 Gallarate (VA) (IT)
(74) Representative: Savoca, Agatino
(86) International application number: PCT/EP2017/056053
(87) International publication number: WO 2017/157976

(56) References cited:
- EP-A2- 2 312 180
- WO-A1-2009/087595
- WO-A1-2015/193705
- WO-A1-2016/001722
- US-A- 3 854 710
- US-A1- 2005 178 626

## Description

### Field of the invention

The present invention relates to an improved suspension.

A suspension of this kind is known for example from WO 2009/087595.

In particular, the suspension according to the present invention was conceived for traditional two-wheel motorcycles and/or for motorcycles or vehicles having three or more wheels with at least two tilting wheels, wherein however other uses thereof in other vehicles are equally possible.

Vehicles with tilting wheels are motor vehicles, motorcycles, scooters or the like which are generally provided with a pair of tilting front wheels and with one rear wheel; vehicles with two rear wheels are also considered. In general, the expression vehicles with tilting wheels has to be understood as meaning vehicles which have at least three wheels and which are capable of tilting sideways due to the presence of a so-called tilting system of the wheels coupled on the same axis, generally the front wheels.

### Description of the prior art

According to the known background art, vehicle suspensions comprise at least one shock absorber. In vehicles with two or more wheels, suspension systems connect the wheels to the frame. The suspensions comprise elastic shock absorbers which carry out the function of dampening the stresses transmitted from the road to the frame.

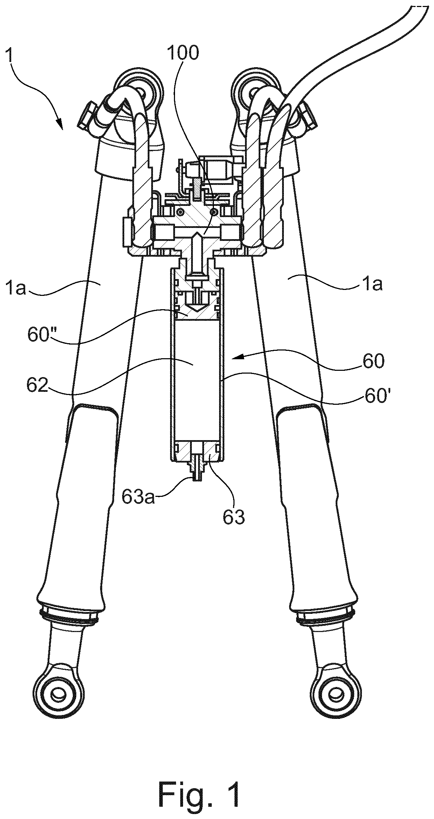

An example of such suspension and tilting systems is provided in Figure 1, where system 1 comprises a pair of shock absorbers 1a in fluid connection to each other according to prior Patent PCT/EP2006/064794 to the same Applicant.

The various types of elastic shock absorbers may include spring systems, in turn comprising helical and leaf springs generally made of metal material, rubber springs and the like, according to the known prior art.

Alternatively, elastic shock absorbers may comprise gas springs.

In contrast to gas springs, metals springs, e.g. a helical spring, commonly used in traditional shock absorbers have a certain elastic constant which can be generally indicated by K.

Due to said constant, the elastic force opposed by the spring is linear with respect to the deformation: by way of example, with an elastic constant K being equal to 10, for each 10 kg of force axially applied to a helical spring, the length thereof varies by 1 mm. If a further axial force of 10 kg is applied to a spring already preloaded with 10 kg, the spring deforms again by 1 mm, until it reaches its maximum deformation, while sandwiching.

Gas springs instead are progressive. By way of example, if 100 kg of axial force are applied to a gas spring, the piston or membrane compressing the pressurized gas moves by a quota X.

By applying a further 100 kg, the piston or membrane moves by a quota Y, which is less than X because the bulk modulus of compressibility of a gas is not constant but depends on density. The denser the gas, the greater the variation in pressure required to obtain a further decrease of the volume.

The excessive gradual engagement of gas springs creates a problem of excessive rigidity of the suspension, generally from mid-stroke onward, thus adversely affecting the driving comfort.

Document US3854710 discloses a suspension according to the preamble of claim 1.

### Summary of the invention

It is the main task of the present invention to provide an improved suspension which allows to overcome the drawbacks left unsolved by solutions of known type. Within this task, it is the object of the present invention to provide a suspension capable of providing an adequately progressive performance without having simultaneous problems of excessive gradual engagement, which affect the currently known suspensions comprising gas shock absorbers.

It is also an object of the present invention to improve the comfort offered by the gas suspension, both when driving alone and when driving with the passenger, and also when driving with the passenger and luggage.

Indeed, the improved spring system allows the suspension to be more effective throughout its work, and to be adequately adjusted in terms of pressures of the different chambers of the accumulators as a function of the type of use.

Thereby, it is possible to customize the performance of the suspension as a function of the type of use (sports, touring, etc.) and of the load weighing thereon (driving alone, with passenger, etc.). This task and these and other objects are achieved by an improved suspension according to appended claim 1.

Further features are mentioned in the dependent claims.

### Brief description of the drawings

Further features and advantages of the present invention will be more apparent from the detailed description of a preferred embodiment, depicted by way of a non-limiting example in the accompanying drawings, in which:
- Figure 1 depicts a suspension and tilting system 1 referred to as HTS (Hydraulic Tilting System), for vehicles having tilting wheels, known from the prior art and belonging to the subject matter of International Patent Application PCT/EP2006/064794 assigned to the same Applicant;
- Figure 2a depicts the suspension and tilting system of Figure 1, comprising an added accumulator with variable volume associated with the HTS suspension according to a first embodiment and to a first connection mode, not forming part of the present invention;
- Figure 2b depicts the suspension and tilting system of Figure 1, comprising an added accumulator with variable volume associated with the HTS suspension according to a first embodiment and to a second connection mode, not forming part of the present invention;
- Figure 2c depicts the suspension and tilting system of Figure 1, comprising a first added accumulator with variable volume associated with the HTS suspension according to a first embodiment and to a third connection mode, not forming part of the present invention;
- Figure 2d depicts the suspension and tilting system of Figure 1, comprising a second accumulator with variable volume associated with the HTS suspension according to a first embodiment and to a fourth connection mode, not forming part of the present invention;
- Figure 3 depicts the suspension and tilting system of Figure 2d in a first stroking step of the suspension system;
- Figure 4 depicts the suspension and tilting system in Figure 2d in a second stroking step of the suspension system, at which the pressure value of the gas in the system is such as to cause the volume of the second accumulator with variable volume, to vary;
- Figure 5 depicts, in detail, the accumulator with variable volume according to the embodiment of Figures 2a-2d;
- Figure 6 depicts the suspension and tilting system of Figure 1 with which an accumulator with variable volume according to a first embodiment of the present invention is associated;
- Figure 6a depicts the suspension and tilting system of Figure 6 in a first stroking step of the suspension system;
- Figure 6b depicts the suspension and tilting system of Figure 6 in a second stroking step of the suspension system, at which the pressure value of the gas in the system is such as to cause the volume of the second accumulator with variable volume, to vary;
- Figure 7 depicts the suspension and tilting system of Figure 1 with which an accumulator with variable volume according to a second embodiment of the present invention is associated;
- Figure 7a depicts the suspension and tilting system of Figure 7 in a first stroking step of the suspension system;
- Figure 7b depicts the suspension and tilting system of Figure 7 in a second stroking step of the suspension system, at which the pressure value of the gas in the system is such as to cause the volume of the accumulator with variable volume, to vary;
- Figure 8 depicts a mono-shock absorber of the type suitable for forming the rear suspension of a motorcycle, with which an accumulator with variable volume not forming part of the present invention is associated;
- Figure 8a depicts a sectional view of the mono-shock absorber with accumulator of Figure 8;
- Figure 9 depicts a motorcycle on which the mono-shock absorber with accumulator of Figure 8, is installed;
- Figure 10 depicts a graph showing the compression of the suspension as a function of the load according to the various configurations.

### Detailed description of the invention

The improved gas suspension **10, 10', 10", 20, 30, 40, 50** comprises at least one shock absorber **10a, 20a, 30a, 40a, 50a** in fluid connection with at least a first accumulator **60, 80, 90,** operatively connected to a second accumulator **70, 80a** with variable volume, adapted to form an expansion chamber having a variable volume for said first accumulator **60, 80, 90.**

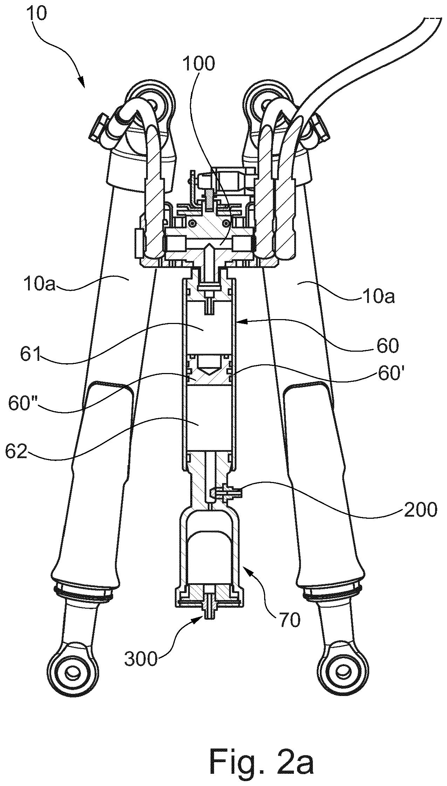

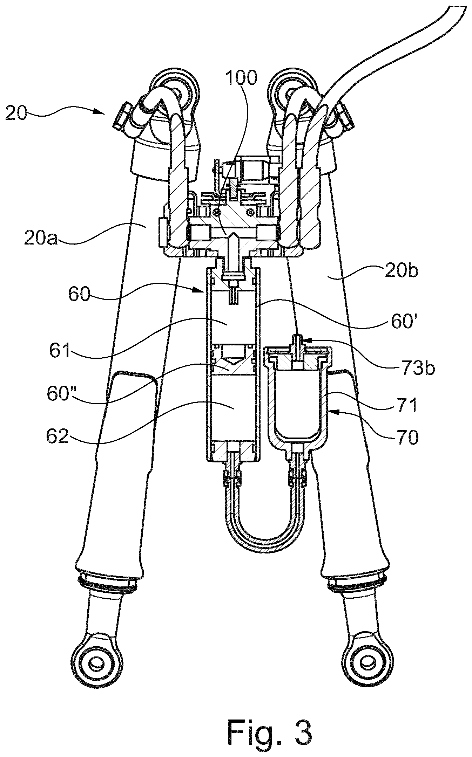

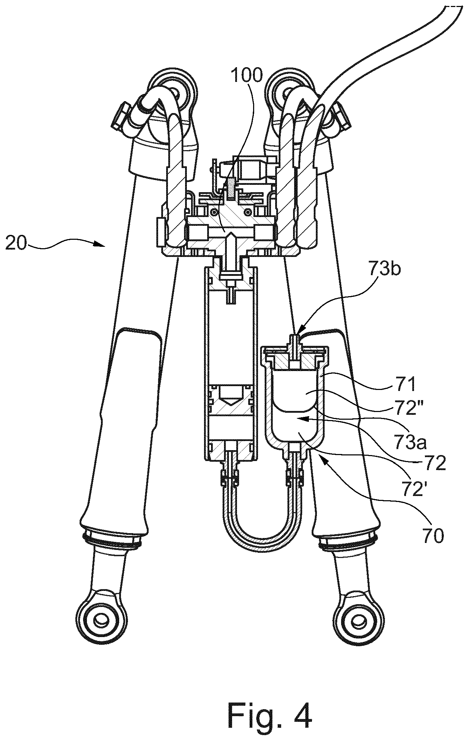

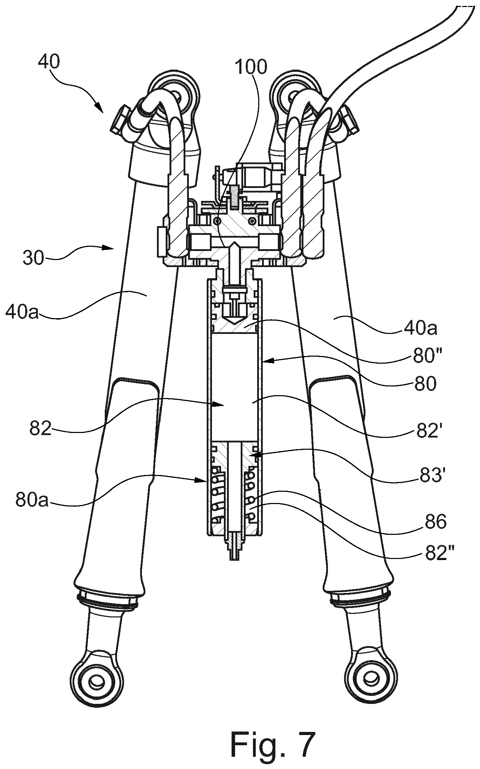

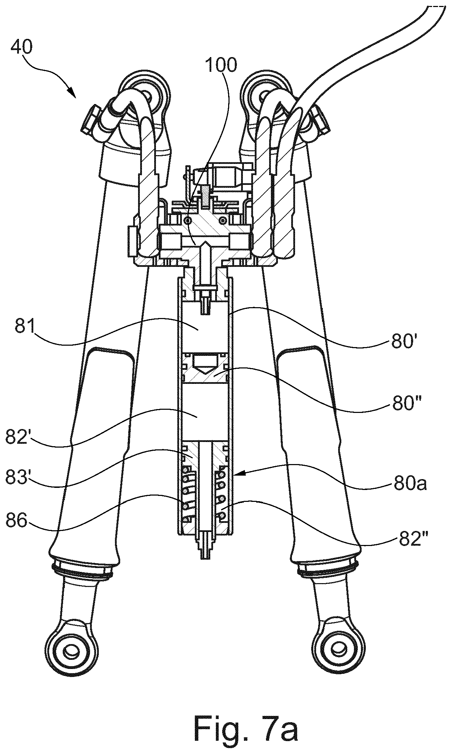

In the embodiments of Figures 2a to 7b, a suspension and tilting system in particular is shown for three- or four-wheel vehicles of which at least two are tilting wheels, and such a system comprises a pair of shock absorbers and each of said shock absorbers comprises at least one cylinder and at least one piston which is movable inside said cylinder and which divides the inner volume of the cylinder into two chambers, an upper chamber and a lower chamber. The upper chamber contains a working fluid in the liquid state, generally oil, and the lower chamber may also contain pressurized gas according to the teachings of PCT/EP2006/064794 mentioned above.

Figure 1 depicts the suspension and tilting system known from PCT/EP2006/064794.

However, the present invention is not to be limited to the application to such a wheel suspension and tilting system according to the teaching of Application PCT/EP2006/064794, and therefore any suspension and tilting system comprising a pair of shock absorbers connected to each other in fluid connection may be equally provided.

Returning to the example depicted in the accompanying Figures 2a to 5, at least one of the chambers of a first of said shock absorbers **10a, 20a** advantageously is in fluid connection by means of a connecting duct **100** with the corresponding chamber of a second of said shock absorbers **10a, 20a,** and advantageously said connecting duct **100** is in fluid connection with a first accumulator **60** serving the function of damper.

Said first accumulator **60** in turn preferably comprises a containment cylinder **60'** inside of which there is provided a first partition wall **60"** slidably associated inside said containment cylinder **60'** so that the working fluid, preferably oil as said, which flows through said duct **100** during the operation of the system, passing from the first to the second shock absorber and vice versa, may also expand inside said containment cylinder **60',** in particular in an upper chamber **61** defined by said partition wall **60"** inside cylinder **60',** thus overcoming the resistance to the sliding of the partition wall **60"** generated by the presence of pressurized gas in the lower chamber **62** of said cylinder **60'.**

The suspension further comprises a second accumulator **70** in fluid communication with said first accumulator.

Said second accumulator **70** is characterized in that it has a variable volume.

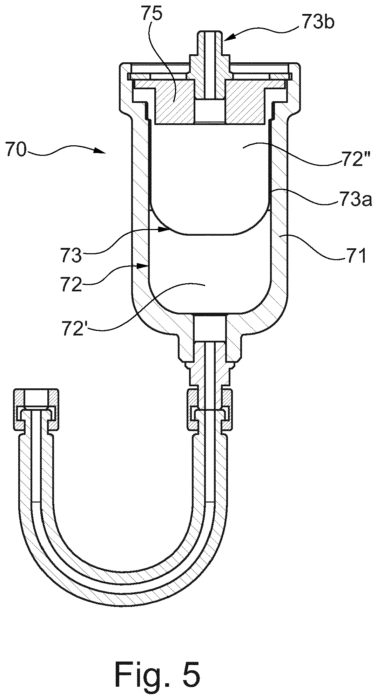

With particular reference to the detail in Figure 5, the second accumulator **70** having a variable volume comprises a preferably substantially cylindrical containment element **71** defining therein an expansion chamber **72** having a variable volume.

Separation means are conveniently provided inside said containment element **71** in order to vary the volume of the expansion chamber **72,** said separation means **73** being adapted to divide said expansion chamber **72** into two parts; a first part **72'** in fluid communication with said first accumulator **60** and a second part **72"** containing contrast means suitable for counteracting the displacement of said separation means **73,** thus counteracting the volume increase of said first part **72'** of said expansion chamber **72.**

According to the embodiment shown in Figures 2a to 4, said separation means **73** preferably consist of a balloon **73a.**

Said second part **72"** of said expansion chamber **72** is therefore completely contained in said balloon **73a** and said contrast means consist of gas pressurized at a pressure **B,** with which balloon **73a** is filled through a suitable filling valve **73b.** Advantageously, said containment element **71** is conveniently provided with a closure plug **75** on which said filling valve **73b** is provided to allow the filling of said balloon **73a** with gas.

With reference to Figure 2a, suspension **10** provides for the accumulator **70** having a variable volume be added to the suspension and tilting system of known type without particular modifications to the system itself. More specifically, the second accumulator **70** having a variable volume is directly connected to the first accumulator 60 by simply replacing the lower closure plug **63** of said first accumulator **60.** Here, the charge of the pressure of the gas in the first accumulator **60** is carried out by means of a first filling valve **200** once said second accumulator **70** is connected, while the charge of the pressure of the gas in the second accumulator **70** having a variable volume is carried out by means of a second filling valve **300** arranged on said second accumulator **70.**

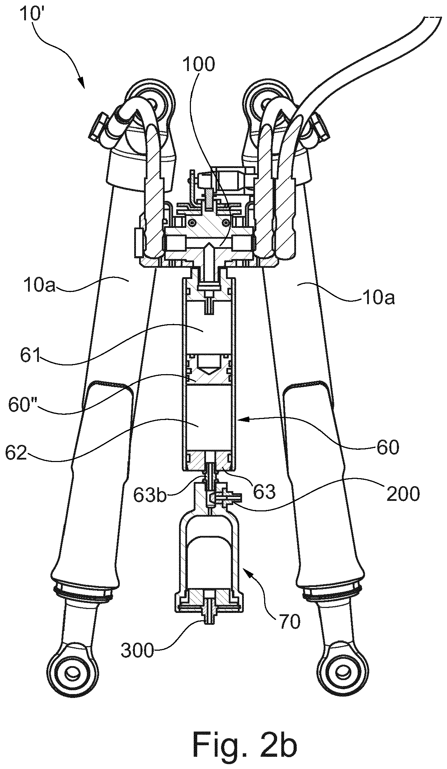

With reference to Figure 2b, another embodiment of suspension **10'** differs from the one shown in Figure 2a in that said second accumulator **70** having a variable volume is directly connected to the closure plug **63** by means of a nipple **63b** accommodated in place of valve **63a** shown in Figure 1 in the prepared seat. According to this configuration, the adjustment of the pressure of the lower chamber **62** of said accumulator may be possible only when the second accumulator **70** has been connected, and by means of said first filling valve **200.** The charge of said second accumulator **70** may occur by means of a dedicated filling valve indicated by numeral **300,** which is entirely similar to valve **73b** shown in Figure 5 provided on plug **75** of said second accumulator **70.**

Among the advantages of the configuration shown in Figure 2b, it is worth noting that the second accumulator **70** having a variable volume can be connected without modifications to the suspension system, and in particular to the first accumulator **60.** Indeed, by removing valve **63a** and replacing said valve with a nipple **63b,** the second accumulator **70** having a variable volume may be connected directly to the closure plug **63.**

With this configuration, as well as with the configuration in Figure 2a, the pressure in the first accumulator is charged upon connection of the second accumulator **70** having a variable volume.

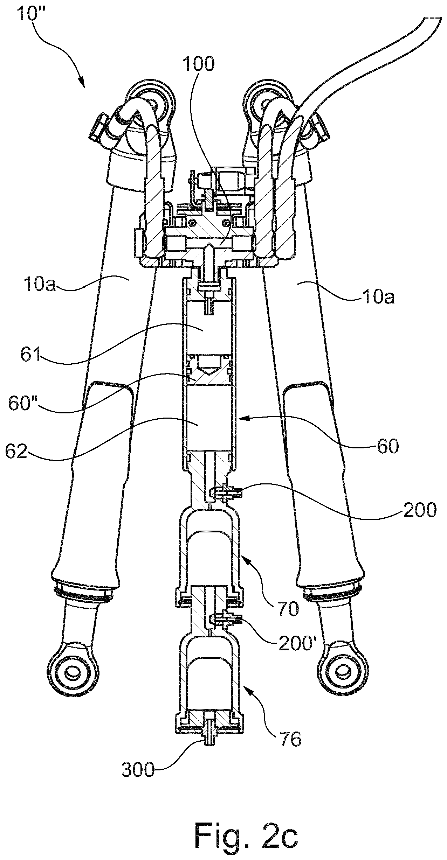

With reference to Figure 2c, another embodiment of suspension **10"** differs from the one shown in Figure 2a in that a third accumulator **76** having a variable volume is connected to the second accumulator **70** having a variable volume. The gradual engagement of the suspension may be further improved with this type of configuration, and accordingly the driving comfort, as better explained below.

Also in this case, the charge of the first accumulator **60** may occur by means of a first filling valve **200,** with the second accumulator **70** being connected. Similarly, the charge of the second accumulator **70** may occur by means of a second filling valve **200'** arranged on the stretch of connection connecting said third accumulator

**76** with said second accumulator **70.** Finally, the charge of said third accumulator **76** occurs by means of a dedicated charge **300** similarly to that described with reference to the embodiments in Figures 2a and 2b.

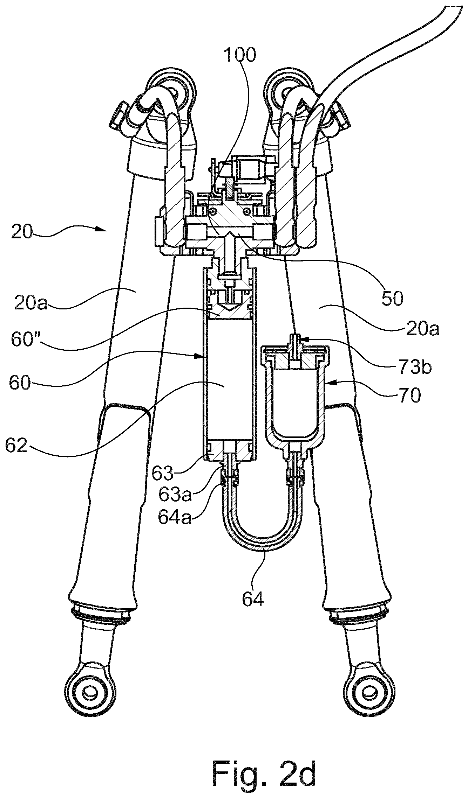

With reference to Figure 2d, in this embodiment the connection of the second accumulator **70** having a variable volume to the first accumulator **60** preferably occurs by means of a flexible tube **64** adapted to directly connect valve **63a** arranged on said plug **63** to the second accumulator **70** having a variable volume.

This embodiment is particularly preferred if a suspension and tilting system of an existing vehicle is to be modified according to the present invention without modifying anything.

Indeed, the integration of the added accumulator on an existing HTS system or HTS system already in use on the market materializes by screwing the threaded connector **64a** of the flexible tube **64** to valve **63a.** Therefore, the solution lends itself to adapting existing suspension systems.

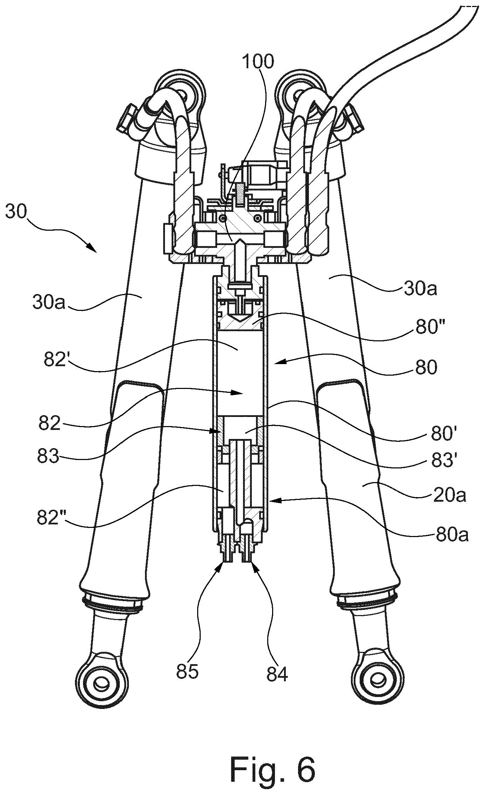

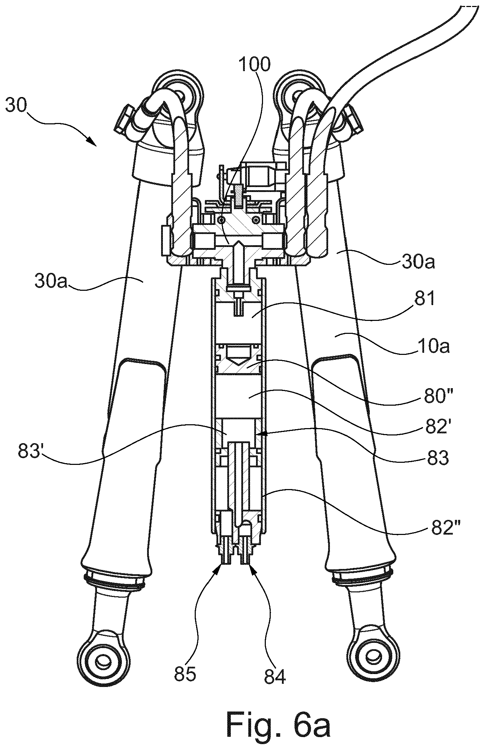

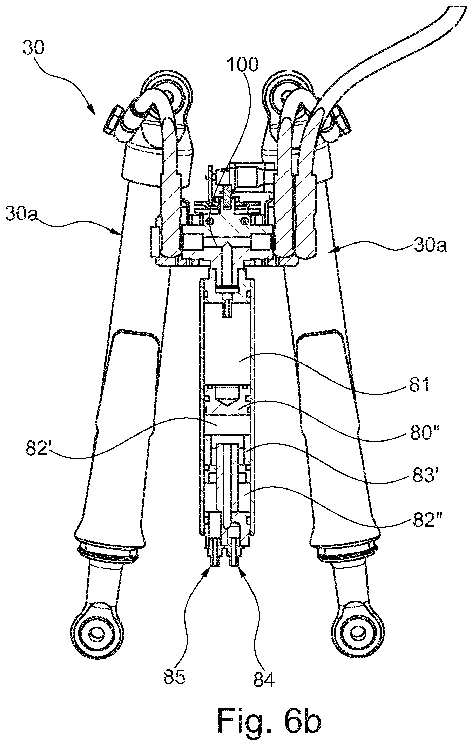

In an embodiment of suspension **30** according to the present invention shown by way of example in Figures 6, 6a and 6b, said second accumulator having a variable volume is shown integrated in the first accumulator **80.**

More specifically, said first accumulator **80** comprises a containment cylinder **80',** closed at the bottom by a bottom wall, internally provided with a first partition wall **80"** slidably associated within said containment cylinder **80',** which is thus divided into an upper chamber **81** and a lower chamber **82.**

Advantageously, said lower chamber **82** of said first accumulator **80** in turn comprises separation means **83** adapted to divide said lower chamber **82** of said first accumulator **80** into two parts. Said separation means **83** preferably comprise here a second partition wall **83'** adapted to divide said lower chamber **82** into two parts; a first part **82'** between said first partition wall **80"** and said second partition wall **83',** a second part **82"** between said second partition wall **83'** and the bottom wall of said containment cylinder **80'.**

Gas is present at a first pressure value, generally indicated by **A,** in the first part **82'** of said lower chamber **82** between said first partition wall **80"** and said second partition wall **83'.** Therefore, in the configuration hereto described, said accumulator **80a** having a variable volume is obtained inside said first accumulator **80.**

Operatively, said upper chamber **81** of said first accumulator **80** is in fluid connection with the hydraulic circuit connecting said shock absorbers **10a** to one another, and therefore it is configured to receive the working fluid (typically oil) enclosed in the upper chambers of said shock absorbers **10a.**

Therefore, the working fluid is capable of flowing inside the upper chamber **81** of said first accumulator 80 and counteracting said first partition wall **80".**

Gas is present at a second pressure value, generally indicated by **B,** in the second part **82"** of said lower chamber **82** between said second partition wall 83' and the bottom wall of said containment cylinder **80'.**

When the thrust exerted on said second partition wall **83'** by pressure **A** of the gas contained in said first part **82'** of said lower chamber **82** exceeds the force of reaction exerted by pressure **B** of the gas contained in said second part **82"of** said lower chamber **82,** the volume of the lower chamber **82"** will be reduced and the first accumulator **80** will behave like an accumulator having a variable volume; vice versa, as long as the thrust exerted on said second partition wall **83'** by pressure **A** of the gas contained in said first part **82'** of said lower chamber **82** is lower than the force of reaction exerted by pressure **B** of the gas contained in said second part **82"of** said lower chamber **82,** the first accumulator **80** will behave like a traditional accumulator.

Due to the possibility of increasing the volume inside accumulator 80, same becomes an accumulator having a variable volume and the suspension system according to the present invention therefore allows the drawbacks which are typical of gas suspensions to be obviated, in particular by obviating an excessive rigidity of the suspension from the second part of the travel up to the stroke end. Advantageously, said first accumulator **80** will be provided with a first gas filling valve **84** for filling the gas contained in said first part **82'** of said lower chamber **82,** and with a second gas filling valve **85** for filling the gas contained in said second part **82"** of said lower chamber **82.**

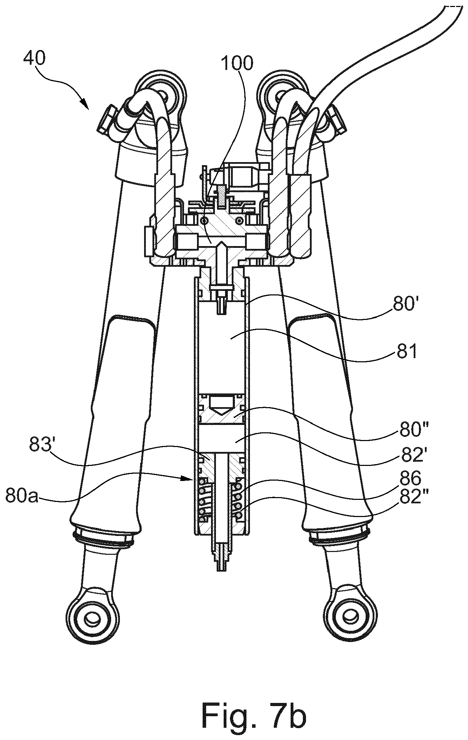

In an alternative embodiment of the present invention shown in Figures 7 and 7a, the suspension and tilting system **40** comprises a first accumulator **80** which, similarly to that shown above, in turn comprises a first **80"** and a second **83'** partition wall, however said second part **82"** of said lower chamber **82,** which is arranged below said second partition wall **83',** advantageously comprises elastic means, for example a helical spring **86** interposed between the bottom wall of said containment cylinder **80'** and said second partition wall **83'.**

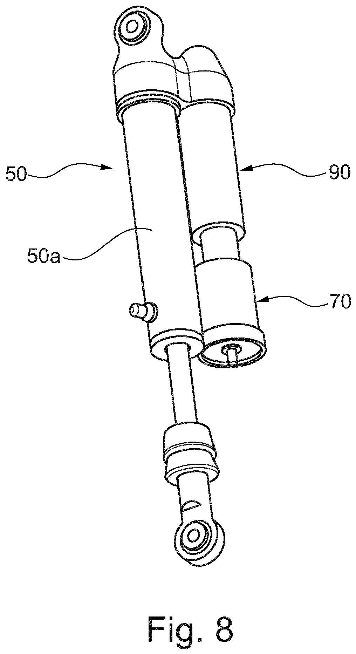

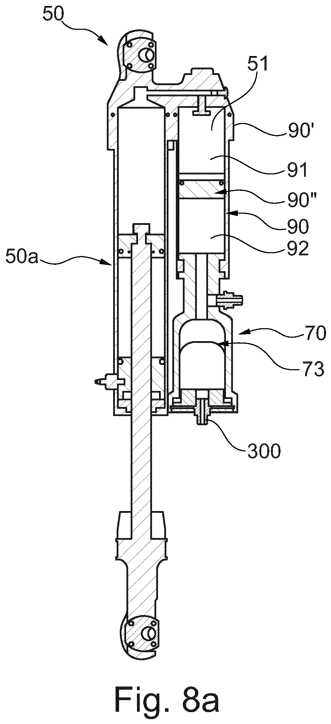

According to the embodiment shown by way of example in Figures 8 and 8a, the improved suspension **50** comprises a shock absorber **50a** comprising at least one oil chamber **51** in fluid connection with a first accumulator **90** comprising a containment cylinder **90'** internally housing a first partition wall **90",** slidably associated within said containment cylinder **90'** which is thus divided into an upper chamber **91** and a lower chamber **92.** Advantageously, a pressurized gas is conveniently contained in said lower chamber **92.** Suspension **50** further comprises a second accumulator **70** having a variable volume, having the same features described above with reference to the embodiment shown in Figure 5. Said second accumulator **70** is in fluid connection with said first accumulator **90.**

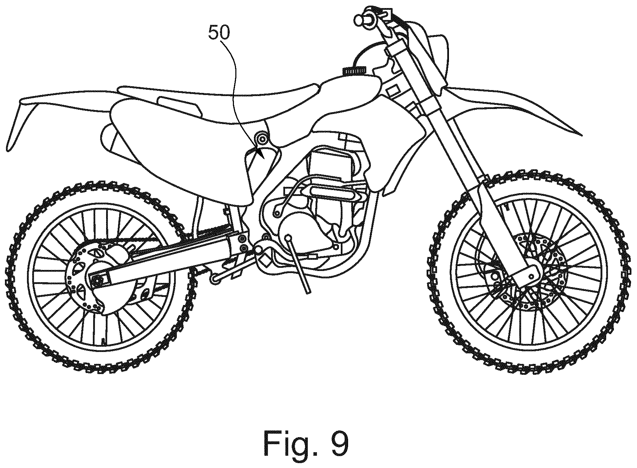

The suspension according to this embodiment can also be used on motorcycles provided with rear mono-shock absorber, as depicted in Figure 9.

It has thus been shown how the improved suspension according to the present invention achieves the predetermined tasks and objects.

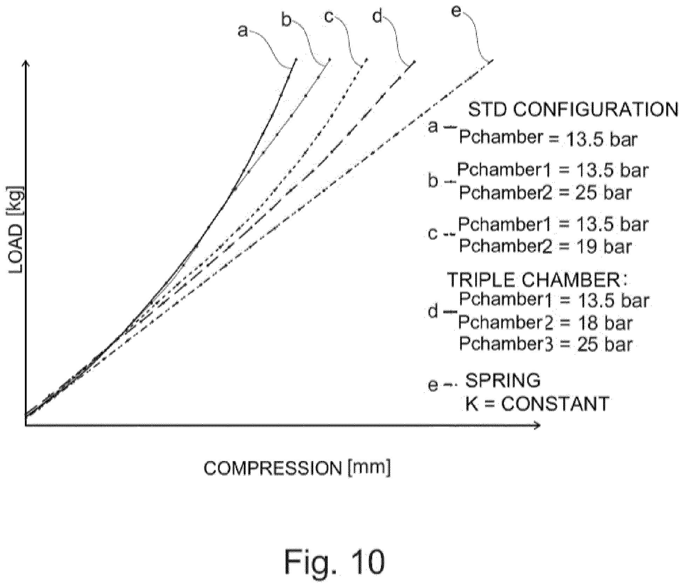

It is worth noting the following, with particular reference to the graph in Figure 10 showing the compression trend of the suspension (expressed in mm) as the load applied (expressed in kg) varies.

The line indicated by letter **a** in the graph depicts the behavior of an HTS suspension in standard configuration, i.e. according to the known configuration of Figure 1.

As is noted from the trend in the graph, the suspension has an excessively progressive reaction, i.e. in the second part of the compression the load increases excessively, which is very different with respect to how much it increases in a spring suspension with a constant elastic constant **K,** the behavior of which is depicted by the line indicated by letter e in the graph.

The line indicated by letter **b** depicts the behavior of a suspension according to, for example, the embodiment shown in Figures 2a, 2b, 2d, 3, 6, 7 and 8 in which a second accumulator having a variable volume is associated with the first accumulator.

It is worth noting how the second accumulator contributes to modifying the dynamic behavior of the suspension by implementing the progressive behaviour which is typical of a gas suspension and therefore making the response of the suspension more linear.

The line indicated by letter **c** in the graph depicts the response of the same configuration in which different pressures are implemented in the accumulators.

Line **d** depicts the behavior of a suspension according to, for example, the embodiment shown in Figure 2c, in which a third accumulator having a variable volume is associated with the first two accumulators.

It is worth noting how the progressive behavior of the suspension is further reduced.

It is apparent from the graph that, with respect to curve **a** depicting a suspension provided with a single accumulator, and with respect to curve e depicting the behavior of a helical spring suspension having an elastic constant **K,** the curves **b, c** and **d** are positioned in intermediate position, therefore not excessively progressive like the system provided with one accumulator alone, and not excessively yielding like what occurs instead in the case of a spring with K constant.

This results also in driving conditions, for example of two people, with driver and passenger, in which the behavior of the suspension does not become excessively rigid as would occur with a single accumulator suspension when disconnections of the ground are encountered during driving: considering that the first part of compression of the suspension is caused by the weight of the passenger which is added to the one of the driver, the second remaining part of compression ensuring the driving comfort is less rigid but in any case is not excessively soft like in the case of elastic spring with constant **k,** which normally by default has the characteristic of quickly going to stroke end.

The intermediate position, where the curves of the suspension are positioned according to the present invention, corresponds to the best comfort level perceived when using the vehicle.

Moreover, in addition to the above improvements to the comfort level, when the improved suspension according to the present invention is associated with a tilting system of the wheels of a vehicle with tilting wheels, as when the invention is applied to the HTS suspension and tilting system shown in Figure 1 or to similar systems, the invention allows to obtain a different transfer of the load during braking, which positively affects the entry of the vehicle into a bend.

Thereby, it was experimentally detected that by changing the transfer value of the load during braking, in particular by increasing the transfer of the load due to a less rigid response of the suspension during the initial load step, the pressures of the oil inside the chambers accordingly vary significantly, in particular they increase, and accordingly the frictions exerted by the gaskets on the seal elements affect the sliding of the parts of the HTS. Thus, a feeling of increased stability is obtained in the step of setting up the bend: the hydraulic gaskets are energized by the pressure itself of the oil which, having an increased value, increasingly create friction on the movement of the pistons on the cylinders of the HTS, and therefore the tilting movement of the vehicle, a condition which makes the driving sensation pleasant in the first step of travelling the bend.

Several changes, modifications, variations and other uses and applications of the invention at hand will become apparent to those skilled in the art after considering the description and the accompanying drawings which show the preferred embodiments thereof.

## Claims

1. Suspension comprising a pair of shock absorbers (30a, 40a), a first gas accumulator (80) and a connecting duct (100) by means of which said pair of shock absorbers (30a, 40a) are in fluid connection with each other, said connecting duct (100) being in turn in fluid connection with said first gas accumulator (80), **characterized in that** said suspension further comprises a second accumulator (80a) having a variable volume, amd **in that** said second accumulator (80a) is formed inside said first gas accumulator (80).

2. Suspension according to claim 1, wherein said first gas accumulator (80) comprises a cylindrical containment cylinder (80'), closed at its bottom by a bottom wall, and a first partition wall (80"), slidably associated within said containment cylinder (80') and dividing said containment cylinder (80') into an upper chamber (81) and a lower chamber (82), and wherein said second accumulator (80a) comprises a second partition wall (83') dividing said lower chamber (82) into a first part (82') comprised between said first partition wall (80") and said second partition wall (83') and a second part (82") comprised between said second partition wall (83') and said bottom wall.

3. Suspension according to claim 2, wherein gas at a first pressure value (A) is present in said first part (82') of said lower chamber (82), and gas at a second pressure value (B) is present in said second part (82") of said lower chamber (82).

4. Suspension according to claim 2, wherein said second part (82") of said lower chamber (82) contains elastic means (86) interposed between said bottom wall and said second partition wall (83').

5. Suspension according to claim 4, wherein said elastic means comprise a helical spring (86).

6. Vehicle with two or more wheels, comprising a suspension according to any one of the preceding claims.

## Patentansprüche

1. Aufhängung, umfassend ein Paar Stoßdämpfer (30a, 40a), einen ersten Gasakkumulator bzw. -speicher (80) und einen Verbindungskanal (100), über den das Paar Stoßdämpfer (30a, 40a) miteinander in Fluidverbindung ist, wobei der Verbindungskanal (100) wiederum in Fluidverbindung mit dem ersten Gasspeicher (80) ist, **dadurch gekennzeichnet, dass** die Aufhängung ferner einen zweiten Akkumulator bzw. Speicher (80a) mit einem variablen Volumen umfasst und dass der zweite Speicher (80a) innerhalb des ersten Gasspeichers (80) ausgebildet ist.

2. Aufhängung nach Anspruch 1, wobei der erste Gasspeicher (80) einen zylindrischen Einschlusszylinder (80'), der an seinem Boden durch eine Bodenwand verschlossen ist, und eine erste Trennwand (80") umfasst, die verschiebbar innerhalb des bzw. mit dem Einschlusszylinder (80') verbunden ist und den Einschlusszylinder (80') in eine obere Kammer (81) und eine untere Kammer (82) teilt, und wobei der zweite Speicher (80a) eine zweite Trennwand (83') umfasst, welche die untere Kammer (82) in einen ersten Teil (82'), der zwischen der ersten Trennwand (80") und der zweiten Trennwand (83') enthalten ist, und in einen zweiten Teil (82") teilt, der zwischen der zweiten Trennwand (83') und der Bodenwand enthalten ist.

3. Aufhängung nach Anspruch 2, wobei Gas mit einem ersten Druckwert (A) in dem ersten Teil (82') der unteren Kammer (82) vorhanden ist und Gas mit einem zweiten Druckwert (B) in dem zweiten Teil (82") der unteren Kammer (82) vorhanden ist.

4. Aufhängung nach Anspruch 2, wobei der zweite Teil (82") der unteren Kammer (82) elastische Mittel (86) enthält, die zwischen der Bodenwand und der zweiten Trennwand (83') angeordnet sind.

5. Aufhängung nach Anspruch 4, wobei die elastischen Mittel eine Schraubenfeder (86) umfassen.

6. Fahrzeug mit zwei oder mehr Rädern, umfassend eine Aufhängung nach einem der vorhergehenden Ansprüche.

## Revendications

1. Suspension comprenant une paire d'amortisseurs (30a, 40a), un premier accumulateur de gaz (80) et un conduit de raccordement (100) au moyen duquel les amortisseurs de ladite paire d'amortisseurs (30a, 40a) sont en communication fluidique l'un avec l'autre, ledit conduit de raccordement (100) étant à son tour en communication fluidique avec ledit premier accumulateur de gaz (80), **caractérisée en ce que** ladite suspension comprend en outre un second accumulateur (80a) ayant un volume variable, et **en ce que** ledit second accumulateur (80a) est formé à l'intérieur dudit premier accumulateur de gaz (80).

2. Suspension selon la revendication 1, dans laquelle ledit premier accumulateur de gaz (80) comprend un cylindre de confinement cylindrique (80'), fermé au niveau de son fond par une paroi inférieure, et une première paroi de séparation (80"), associée de façon coulissante à l'intérieur dudit cylindre de confinement (80') et divisant ledit cylindre de confinement (80') en une chambre supérieure (81) et une chambre inférieure (82), et dans laquelle ledit second accumulateur (80a) comprend une seconde paroi de séparation (83') divisant ladite chambre inférieure (82) en une première partie (82') comprise entre ladite première paroi de séparation (80") et ladite seconde paroi de séparation (83') et une seconde partie (82") comprise entre ladite seconde paroi de séparation (83') et ladite paroi inférieure.

3. Suspension selon la revendication 2, dans laquelle un gaz à une première valeur de pression (A) est présent dans ladite première partie (82') de ladite chambre inférieure (82), et un gaz à une seconde valeur de pression (B) est présent dans ladite seconde partie (82") de ladite chambre inférieure (82).

4. Suspension selon la revendication 2, dans laquelle ladite seconde partie (82") de ladite chambre inférieure (82) contient un moyen élastique (86) interposé entre ladite paroi inférieure et ladite seconde paroi de séparation (83').

5. Suspension selon la revendication 4, dans laquelle ledit moyen élastique comprend un ressort hélicoïdal (86).

6. Véhicule doté de deux roues ou plus, comprenant une suspension selon l'une quelconque des revendications précédentes.
